# EUROPEAN PATENT APPLICATION

(11) **EP 1 069 746 A1**
(43) Date of publication of application: **17.01.2001**
(21) Application number: 99401791.1
(22) Date of filing: 16.07.1999
(51) Int. Cl.: H04L 29/06

(54) **Service provisioning network element, related user terminal and related software modules**

(71) Applicant: ALCATEL, 75008 Paris (FR)
(72) Inventor: Vanderstraeten, Hans, 9280 Lebbeke (BE); Van Leekwijck, Werner Adriaan Josephine, 2610 Antwerp (BE); Chantrain, Dominique Helena Lucia, 2650 Edegem (BE)
(74) Representative: Plas, Axel

(57) **Abstract**

The service provisioning network element, provides a service in a communications network to a user, either via an associated user terminal or via an additional network element of the communications network. The service is realised by means of a plurality of software components and the service provisioning network element is able to receive a request for sending at least one software component of the plurality of software components to the user and to subsequently fetch this at least one software component from a component storage means wherein this plurality of software components is stored. These fetched software components are sent to the associated user terminal or to the additional network element.

The user terminal that invokes the service from the service provisioning network element in the communications network is able to detect if a software component is missing at the user terminal and then requests the service provisioning network element to send this software component. Subsequently the software component are received and installed at the user terminal.

Additionally, the service provisioning network element may also be able to detect if a software component is missing at the associated user terminal or at the additional network element.

## Description

The present invention relates to a service provisioning network element as described in the preamble of claim 1, to a user terminal as described in the preamble of claim 3 and the related software modules as described in the preamble of claims 4, 5 and 6.

Such devices are already known in the art, e.g. from the United States Patent US5,790,789, *"METHOD AND ARCHITECTURE FOR THE CREATION CONTROL AND DEPLOYMENT OF SERVICES WITHIN A DISTRIBUTED COMPUTER ENVIRONMENT".*

Therein, a distributed computing system is described. This distributed computing system consists of a number of computer terminals each connected via a communications-network in order to exchange information. Through this system there are software components, called services in the cited patent, distributed throughout the entire computing system. Each of the software components performs a prescribed function. A number of this software components together co-operatively perform a service, called a task in the cited patent, which is provided to a user of a computer terminal. These software components are distributed over the computing system in a static way which means that each software component is installed in a computer host at configuration. If a service is requested and the supporting software components corresponding to this service are not available at the appropriate places, an error situation occurs and the invoked service will be terminated. This might occur in case one or more software components are not available because of the need of a different service or in case of changing configuration for example in case of another kind of user terminal. Installing these components manually by using software provided by a service provider or network provider refrains the user of immediate service execution.

An object of the present invention is to provide devices realising the method of the above known type but wherein a requested service can be immediately provided to the requesting user and in a more efficient manner without manual introduction of this service.

According to the present invention, this object is achieved by the devices as claimed in claim 1 and claim 3 and the related software modules as claimed in the respective claims, claim 4 and claim 6.

Indeed if at service invocation a user terminal or a network element running the service for the user detects that there is one or more missing software components for providing this service, this user terminal or the network element is then able to request the service provisioning network element to provide the missing software components from the present repository containing all possible software components. The service provisioning network element then provides this requesting user terminal or the network element with the meant software components which can be installed in the mean time at this terminal. At that time all software components are available, facilitating the network to provide the requested service to the user.

Another characteristic feature of the present invention is described in claim 2 and the related software module as claimed in claim 5.

Indeed, by facilitating the service provisioning network element with the means to detect if there is a missing software component corresponding with the invoked service at the service requesting user terminal or the network element, the service provisioning network element is able to determine which software component is needed and subsequently can send this component towards the network element or the user terminal that needs the software component. At the time all software components are available, the network element or the user terminal are able to provide the requested service to the user.

The above and other objects and features of the invention will become more apparent and the invention itself will be best understood by referring to the following description of an embodiment taken in conjunction with the accompanying drawings wherein:
FIG. 1 represents a telecommunications network together with a coupled service provisioning network element SPNE and the user terminals UT0 and UT1;
FIG. 2 represents an implementation of the service provisioning network element SPNE as presented in FIG.1; and
FIG. 3 represents an implementation of the user terminals UT0, as presented in FIG. 1, UT1 having a similar structure.

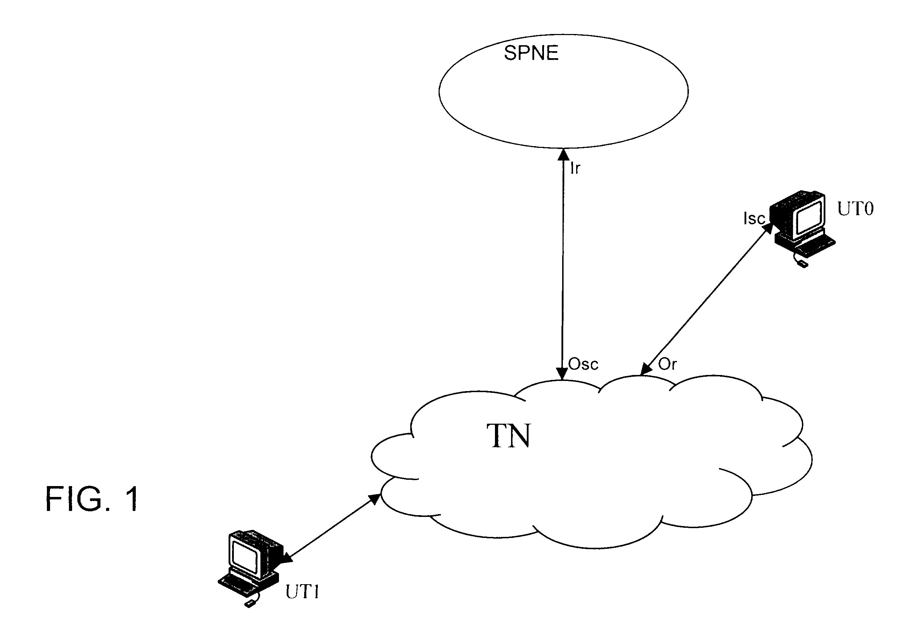

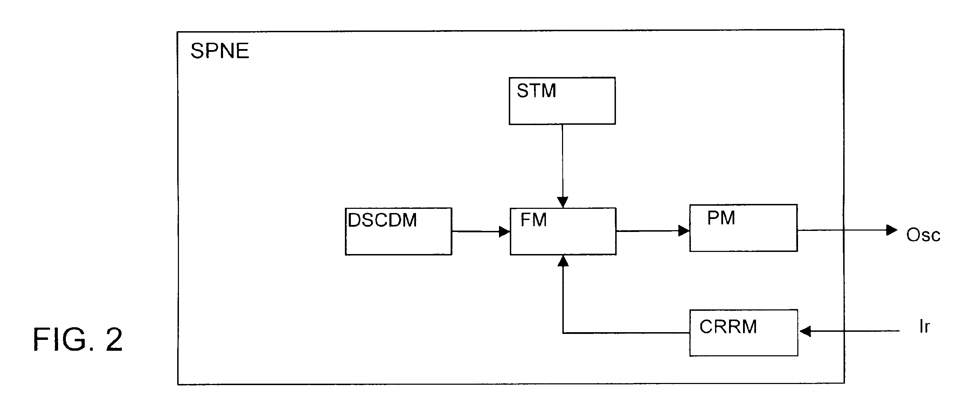

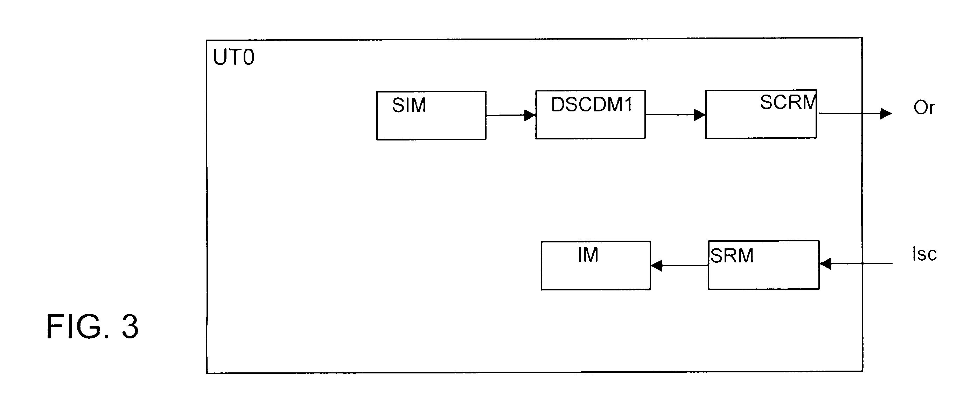

In the following paragraphs, referring to the drawings, an implementation of the devices according to the present invention will be described. In the first paragraph of this description the main elements of this network and the main coupled elements as presented in FIG. 1 are described. Special attention will be drawn to the components of the service provisioning network element and the components of the user-terminal as presented in the respective FIG. 2 and FIG. 3. In the second paragraph, all connections between the before mentioned network elements and described components are defined. In the succeeding paragraph the actual execution of the service provisioning is described.

The essential elements of this embodiment of the present invention are a telecommunications network TN constituted by an internet network. This network can be implemented by any other communications network. Further there is a service provisioning network element SPNE that enables a network provider to provide a user terminal or any network element with necessary software components needed to provide a service to this user terminal. This service provisioning network element SPNE has all necessary software components at its disposal.

In order to keep simplicity in this description it is chosen to only describe two user terminals UT0 and UT1 connected to the network, although this normally will be a plurality of user-terminals. Both terminals comprise a processor and a program storage device on which software components can be installed. Both terminals are a personal computer in this embodiment.

The service provisioning network element SPNE is via a Transmission Control Protocol over Internet Protocol, further referred to as a TCP/IP, connection and the necessary termination means coupled to the telecommunications network TN. Both user terminals are supposed to be connected to the network via a TCP/IP connection.

The service provisioning network element SPNE as presented in FIG. 2 is built up of a missing software component request reception means CRRM that is able to receive a request for sending at least one missing software component in direction of the service requesting user and a software component fetching means FM that is able to fetch such a missing software component. The service provisioning network element SPNE further comprises a software component storage means STM that consists of a repository of all necessary software components and a software component provisioning means PM that is adapted to send the missing software component to its destination. The service provisioning network element SPNE additionally comprises a missing software component detection means DSCDM that enables this service provisioning network element SPNE to detect if there is a missing software component corresponding with the service invoked at the user terminal and request the software component fetching means FM these software components from the repository. The missing software component request reception means CRRM has an input-terminal that is at the same time an input-terminal Ir of the service provisioning network element SPNE. This software component request reception means CRRM has an output-terminal that is coupled to an input-terminal of the software component fetching means FM. The software component fetching means FM has a second input-terminal that is coupled to an output-terminal of the storage means STM and optionally a third input-terminal that is coupled to an output-terminal of the missing software component detection means DSCDM. Further, the software component fetching means FM has an output-terminal that is coupled to an input-terminal of the provisioning means PM that in its turn has an output-terminal that is at the same time an output-terminal Osc of the service provisioning network element SPNE.

The user-terminal UT0 as presented in FIG. 3 is built up of a service invocation means SIM that is adapted to select and invoke a telecommunications service, a missing software component detection means DSCDM1 that is able to detect if there is a missing software component corresponding with the service invoked at the user terminal and a software component requesting and sending means SCRM that is able to request the service provisioning network element SPNE for the missing software component(s). The user-terminal UT0 further comprises a software component reception means SRM that is adapted to receive the missing software component(s) and a software component installation means IM that is prepared to install the received software component in the appropriate place at the user-terminal UT0. For the sake of clarity, the part of UT0 actually running the service is not shown in FIG. 3.

The missing software component detection means DSCDM1 of user terminal UT0 has an input-terminal that is coupled to an output-terminal of the service invocation means SIM. The missing software component detection means DSCDM1 has an output-terminal that is coupled to an input-terminal of the software component requesting and sending means SCRM that in its turn has an output-terminal that is at the same time an output-terminal Or of the user-terminal UT0. The software component reception means SRM has an input-terminal that is at the same time an input-terminal of user terminal UT0. The software component reception means SRM has an output-terminal that is coupled to a input-terminal of the software component installation means IM.

The user-terminal UT1 comprises the same means as described for user-terminal UT0.

In order to explain the operation of the present invention it is assumed that there is a number of telecommunications services available within the telecommunications network TN, further referred to as network. This means that these services are available to each of the user terminals UT0 and UT1.

It is further assumed that a user at user terminal UT0 often makes use of a service supported throughout the entire network. This means that all necessary software are installed at the appropriate places within the network in such a way that the requested service is supported for the meant user.

It is additionally assumed that the user at a certain moment of time wants to use another service he didn't use till now, for example an voice over IP service.

The user invokes this service and activates the service invocation means IM of user terminal UT0 which selects the meant service. Subsequently the missing software component detection means DSCDM1, detects that the user terminal UT0 lacks a part of a number of software components that need to be installed to facilitate the activation of the meant service. This detection might be done by consulting a table containing information on which software components are necessary to execute a service successfully and which software components are available within the user terminal. In its turn the software component requesting and sending means SCRM composes a request for the missing software components and sends the request to the missing software component request reception means CRRM of the service provisioning network element SPNE. This missing software component request reception means CRRM receives the request and passes it to the fetching means that in its turn will fetch the required software components from the service provisioning network element's software components repository. The software component fetching means FM subsequently hands the missing software components over to the software component provisioning means PM that then provides the software component reception means SRM of user terminal UT0 with the missing software components. At last the components are installed at the appropriate place (not shown) at the user terminal UT0 facilitating the user terminal to execute the meant service. At that time the meant service is resumed at the stage where it was set on hold. After the service invocation hold the invoking user might have received a message on his terminal screen notifying the user about the required invocation on hold setting.

It is to be remarked that the service provisioning network element SPNE also is able to detect for an invoked service if a necessary software component is missing within another network by means of the missing software component detection means DSCDM. If a service is invoked from a user terminal that does not possess a missing software component detection means DSCDM1, the missing software component detection means DSCDM detects that there are missing software components to execute the service. This detection might be done by consulting a table containing information on which software components are necessary to execute a service successfully and on which software components are available in the relevant network elements and the user terminal. This table might also contain information on the capabilities of the user terminal like possessing or not a missing software component detection means DSCDM1. Based hereon the service provisioning network element can decide to activate or deactivate the missing software component detection means DSCDM.

Subsequently, this means will request the fetching means FM to fetch the missing software components from the repository STM and send to a software component reception means of this network element (not shown in any of the figures) that in its turn installs the software component. Further handling is the same as described before. The result in the end is that the requested and invoked service can be resumed and provided to the requesting user.

It is further to be remarked that as a user terminal any kind of user terminal comprising a processor and a program storage device on which software components can be installed

It is also to be remarked that in case of a user terminal not having the necessary resources to run the software components, this then can be done by an associated network element providing the same functionality and having therefore a structure similar to that of the user terminal as far as the provision of a service according to the invention is concerned.

Although the above embodiment of the invention has been described by means of functional blocks, their detailed realisation based on this functional description should be obvious for a person skilled in the art and is therefore not described.

While the principles of the invention have been described above in connection with specific apparatus, it is to be clearly understood that this description is made only by way of example and not as a limitation on the scope of the invention, as defined in the appended claims.

## Claims

1. Service provisioning network element (SPNE), for provisioning a service in a communications network to a user, either via an associated user terminal or via an additional network element of said communications network, said service being realised by means of a plurality of software components **CHARACTERISED IN THAT** said service provisioning network element (SPNE) comprises the following means:
a. missing software component request reception means (CRRM), adapted to receive a request for sending at least one software component of said plurality of software components to said associated user terminal or said additional network element respectively;
b. software component fetching means (FM), coupled with an input to an output of said missing software component request reception means (CRRM) and adapted to fetch said at least one software component;
c. software component storage means (STM), coupled with an output to a second input of said software component fetching means (FM) and able to store said plurality of software components and to provide software components to said software component fetching means (FM); and
d. software component provisioning means (PM), coupled with an input to an output of said software component fetching means (FM) and adapted to send said at least one software component to said associated user terminal or said additional network element respectively.

2. Service provisioning network element (SPNE) according to claim 1, **CHARACTERISED IN THAT** said service provisioning network element (SPNE) further comprises a missing software component detection means (DSCDM) adapted to detect if said at least one software component is missing at said associated user terminal or said additional network element respectively and in affirmative to send a request to said software component fetching means (FM) for fetching said at least one software component.

3. User terminal (UT0, UT1), for invocation of a service from a service provisioning network element (SPNE) in a communications network said service being provided to a user via said user terminal, said service comprising a plurality of software components, said user terminal comprising the following means:
a. service invocation means (SIM), adapted to select and invoke said service, **CHARACTERISED IN THAT** said user terminal further comprises the following means:
b. missing software component detection means (DSCDM1) coupled with an input to an output of said service invocation means (SIM) and adapted to detect if at least one software component is missing at said user terminal;
c. software component requesting and sending means (SCRM), coupled with an input to an output of said missing software component detection means (MSCDM1) and adapted to request from said service provisioning network element (SPNE) said at least one software component;
d. software component reception means (SRM) adapted to receive said at least one software component.

4. Software module, for running on a processing system for inclusion in a service provisioning network element and for provisioning a service in a communications network to a user, either via an associated user terminal or via an additional network element of said communications network, said service being realised by means of a plurality of software components **CHARACTERISED IN THAT** said software module comprises the following software sub-modules:
a. a missing software component request reception sub-module, adapted to receive a request for sending at least one software component of said plurality of software components to said associated user terminal or said additional network element respectively;
b. a software component fetching sub-module, co-operating with said missing software component request reception sub-module and adapted to fetch said at least one software component;
c. a software component storage sub-module, co-operating with said software component fetching sub-module and able to store said plurality of software components and to provide software components to said software component fetching sub-module; and
d. a software component provisioning sub-module, co-operating with said software component fetching sub-module and adapted to send said at least one software component to said associated user terminal or said additional network element respectively.

5. Software module according to claim 4, **CHARACTERISED IN THAT** said software module further comprises a missing software component detection sub-module, adapted to detect if said at least one software component is missing at said associated user terminal or said additional network element respectively and in affirmative to send a request to said software component fetching sub-module for fetching said at least one software component.

6. Software module for running on a processing system for inclusion in a user terminal and for invocation of a service from a service provisioning network element (SPNE) in a communications network said service being provided to a user via said user terminal, said service comprising a plurality of software components, said software module comprising the following software sub-modules:
a. a service invocation sub-module, adapted to select and invoke a telecommunications service, **CHARACTERISED IN THAT** said user software module further comprises the following software sub-modules:
b. a missing software component detection sub-module co-operating with said service invocation sub-module and adapted to detect if at least one software component is missing at said user terminal;
c. a software component requesting and sending sub-module, co-operating with said missing software component detection sub-module and adapted to request from said service provisioning network element (SPNE) said at least one software component;
d. a software component reception sub-module adapted to receive said at least one software component.
